# EUROPÄISCHE PATENTANMELDUNG

(11) **EP 2 241 585 A1**
(43) Veröffentlichungstag der Anmeldung: **20.10.2010**
(21) Anmeldenummer: 09005092.3
(22) Anmeldetag: 07.04.2009
(51) Int. Cl.: C08G 73/00, C08G 73/08

(54) **Polyoxadiazol-Polymere**

(71) Anmelder: GKSS-Forschungszentrum Geesthacht GmbH, 21502 Geesthacht (DE); Technische Universität Hamburg-Harburg, 21073 Hamburg (DE); TuTech Innovation GmbH, 21079 Hamburg (DE)
(72) Erfinder: Loos, Marcio Rodrigo, 21502 Geesthacht (DE); Abetz, Volker, 21335 Lüneburg (DE); Schulte, Karl, 21244 Buchholz i.d. Nordheide (DE)
(74) Vertreter: Grebner, Christian Georg Rudolf

(57) **Zusammenfassung**

Die Erfindung betrifft Polyoxadiazol-Polymere sowie eine Verwendung der Polyoxadiazol-Polymere. Ferner betrifft die Erfindung ein Verfahren zum Herstellen von Polyoxadiazol-Polymeren.

Die Polyoxadiazol-Polymere zeichnen sich dadurch aus, dass sie eine der folgenden Strukturen 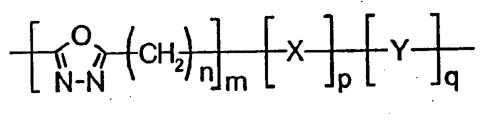 oder 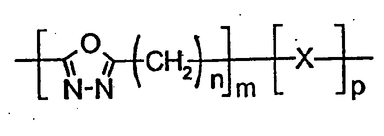 oder 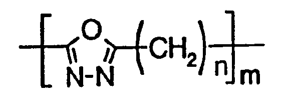 aufweisen, wobei n eine natürliche Zahl ≥ 1, vorzugsweise ≤ 20, vorzugsweise zwischen 6 und 10 (6 ≤ n ≤ 10) ist, m, p und q ganze Zahlen sind, X und Y unabhängig eine Gruppe der nachfolgend beschriebenen Strukturen 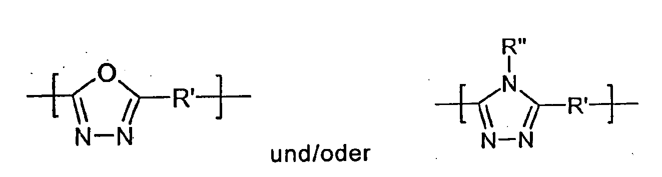 und/oder 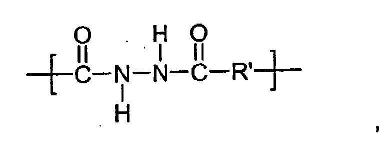 wobei R' eine Gruppe mit 1 bis 40 Kohlenstoffatomen ist, die insbesondere bei der Synthese von einer Dicarbonsäure bereitgestellt werden, und wobei R" ein Wasserstoffatom oder eine Gruppe mit 1 bis 40 Kohlenstoffatomen ist, die insbesondere während der Synthese von einem primären Amin bereitgestellt werden.

## Beschreibung

Die Erfindung betrifft Polyoxadiazol-Polymere sowie eine Verwendung der Polyoxadiazol-Polymere. Ferner betrifft die Erfindung ein Verfahren zum Herstellen von Polyoxadiazol-Polymeren.

Polyoxadiazole weisen neben hoher chemischer und thermischer Stabilität hohe Glasübergangstemperaturen auf. Sie können direkt verarbeitet, z.B. zu Fasern versponnen werden, oder es können Beschichtungen aus ihnen hergestellt werden.

Polyoxadiazole werden in verschiedenen Lösungsmitteln synthetisiert. Ein bekanntes Beispiel ist die Synthese von Oleum, rauchender Schwefelsäure, als Lösungsmittel. Oleum stellt eine sehr toxische und korrosive Syntheseumgebung dar. Nach dem Ende der Synthesereaktion ist eine exzessive Neutralisierung des Mediums erforderlich. Die Synthese von Polyoxadiazol in Oleum ist beispielsweise in DD 292 919 A5 und DE 24 08 426 C2 beschrieben. Beispielsweise besteht in der Luftfahrtindustrie ein Bedarf an leistungsfähigen Polymeren bzw. Polymerwerkstoffen. Insbesondere haben thermoplastische Polyoxadiazol-Polymere ein großes Potential als Konstruktionswerkstoff aufgrund ihrer mechanischen Eigenschaften. Hierzu wurde in US-A-5 118 781 vorgeschlagen, durch eine aromatische nucleophile Verdrängungsreaktion von Dihydroxyvinylmonomeren mit aromatischen Dihalogeniten oder aromatischen Dinitroverbindungen Poly(1,3,4-Oxadiazole) zu synthetisieren. Die Polymerisationen wurden in polaren, aprotischen Lösungen wie zum Beispiel Sulfonlane oder Diphynolsulfone unter Verwendung von Alkalimetallbasen wie zum Beispiel Kaliumkarbonat bei erhöhten Temperaturen durchgeführt.

Außerdem haben beispielsweise Y. lwakura et al. (Journal of Polymer Science (A) 3, Seite 45, 1965) ein Verfahren zur Synthese von Polyoxadiazolen aus Hydrazinsulfat und zweiwertigen aromatischen Säuren wie Terephthalsäure durch Lösungspolykondensation in rauchender Schwefelsäure und Polyphosphorsäure (PPA) beschrieben.

Weiterhin wurden von S. K. Varma et al. (Journal of Applied Polymer Science, Vol. 26, Seiten 571-577, 1981) Polyoxadiazol-Copolymere durch die Reaktion von Terephthalsäure, Maleinsäure und Fumarsäure mit Hydrazinsulfat in Gegenwart von rauchender Schwefelsäure oder Polyphosphorsäure hergestellt.

In CA 882,789 wurden durch Cyclodehydratisierung von N,N'-bis(isomaleimid)polyhydrazid Poly-1,3,4-oxadiazole, die Alkenradikale enthielten, hergestellt.

Überdies wurden von R. S. Jones et al. (Journal of Applied Polymer Science, Vol. 25, Seiten 315-321, 1980) Poly-1,4-phenylen-1,3,4-oxadiazol durch Polymerisation von Terephthalsäure und Hydrazindihydrochlorid in rauchender Schwefelsäure hergestellt.

Ferner ist in RU 2263685 ein Verfahren zum Herstellen eines Poly-1,3,4-oxadiazols mit einer Molekülmasse von 60000 bis 450000 Da beschrieben. Das Verfahren umfasst die Polykondensationsreaktion einer Dicarbonsäure mit einem Hydrazinderivat oder mit einem Dicarbonsäuredihydrazid bei einer Temperatur von 190 bis 220 °C, die 3 bis 7 h lang in einer ionischen Flüssigkeit durchgeführt wird und die Gegenwart von Triphenylphosphit umfasst.

Des Weiteren ist in JP 63118331 A ein Verfahren zum Herstellen eines Polyoxadiazols durch Kondensation von Dicarbonsäure und Hydrazinsulfat unter Verwendung einer Mischung aus Phosphorpentoxid und Methansulfonsäure als Kondensationsmittel offenbart.

Außerdem ist in GB 1 303 409 A die Herstellung von Poly-1,3,4-oxadiazolen durch die Reaktion von para-orientierten Carbonsäuren mit Hydrazinsalzen in Chlorsulfonsäure bei einer Temperatur über 50 °C offenbart.

Darüber hinaus ist in DE 36 20 022 A1 die Herstellung von Polyphenylen-1,3,4-oxadiazolpolymeren durch die Reaktion von Hydrazinsulfat und Terephthalsäure in rauchender Schwefelsäure offenbart.

Weiterhin ist in DD 296 277 A5 die Herstellung von 1,3,4-Oxadiazolen durch die Reaktion von Carbonsäuren mit Hydrazin oder Hydrazinsalzen, Carbonsäuren mit Carbonsäurehydraziden, Diacylhydraziden, Dicarbonsäuren und/oder Carbonsäurederivaten mit Hydrazin und/oder Hydrazinsalzen in Schwefelsäure und in einem Kondensationsmittel offenbart.

Ausgehend von diesem Stand der Technik besteht die Aufgabe der vorliegenden Erfindung darin, Hochleistungsstoffe bzw. Hochtemperaturstoffe, insbesondere Hochleistungspolymere, mit verbesserten Eigenschaften für zahlreiche anspruchsvolle Anwendungen bereitzustellen.

Die Aufgabe der Erfindung wird gelöst durch Polyoxadiazol-Polymere, die dadurch weitergebildet werden, dass die Polyoxadiazol-Polymere eine der folgenden Strukturen 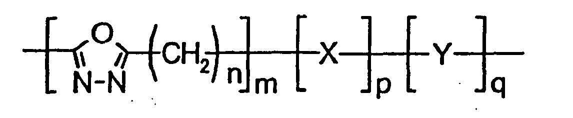 oder 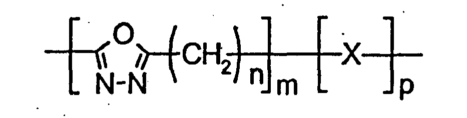 oder 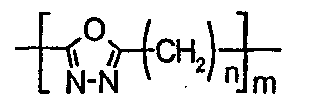 aufweisen, wobei n eine natürliche Zahl ≥ 1, vorzugsweise ≤ 20, vorzugsweise zwischen 6 und 10 (6 ≤ n ≤ 10), ist, m, p und q ganze Zahlen sind, X und Y unabhängig eine Gruppe der nachfolgend beschriebenen Strukturen 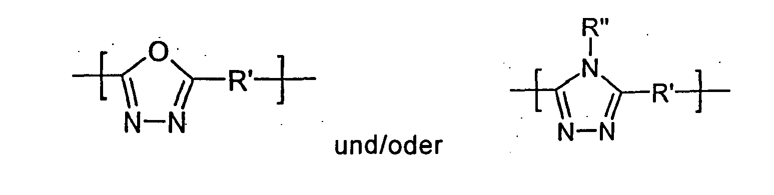 und/oder 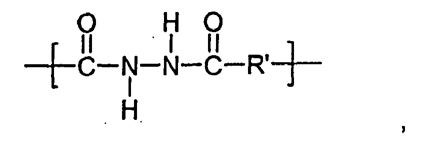 wobei R' eine Gruppe mit 1 bis 40 Kohlenstoffatomen ist, die insbesondere bei der Synthese von einer Dicarbonsäure bereitgestellt werden, und wobei R" ein Wasserstoffatom oder eine Gruppe mit 1 bis 40 Kohlenstoffatomen ist, die insbesondere während der Synthese von einem primären Amin bereitgestellt werden.

Gemäß einer alternativen Lösung werden Polyoxadiazol-Polymere vorgeschlagen, die dadurch weitergebildet sind, dass die Polyoxadiazol-Polymere eine der folgenden Strukturen 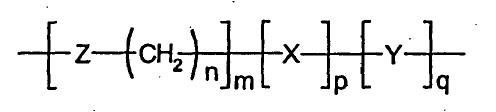 oder 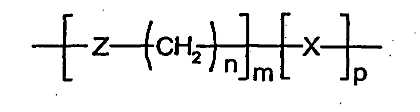 oder 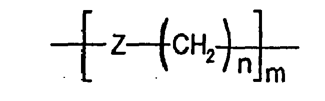 aufweisen, wobei n eine natürliche Zahl ≥ 1, vorzugsweise ≤ 20, vorzugsweise zwischen 6 und 10 (6 ≤ n ≤ 10), ist, m, p und q ganze Zahlen sind, X und Y unabhängig eine Gruppe der nachfolgend beschriebenen Strukturen 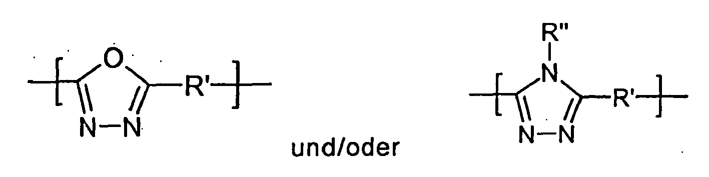 und/oder 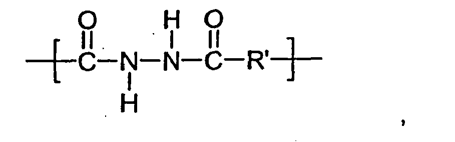 sind, wobei Z eine, vorzugsweise unabhängige, Gruppe ist, die eine der folgenden Strukturen 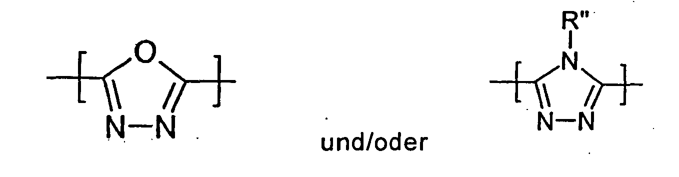 und/oder 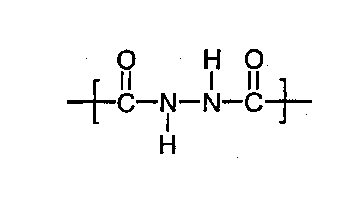 aufweist, wobei R' eine Gruppe mit 1 bis 40 Kohlenstoffatomen ist, die insbesondere bei der Synthese von einer Dicarbonsäure bereitgestellt werden, und wobei R" ein Wasserstoffatom oder eine Gruppe mit 1 bis 40 Kohlenstoffatomen ist, die insbesondere bei der Synthese von einem primären Amin bereitgestellt werden. Bevorzugterweise werden die Kohlenstoffatome von R' bei der Synthese von einer Dicarbonsäure und die Kohlenstoffatome von R" von einem primären Amin bereitgestellt.

Durch die Erfindung werden Polyoxadiazol-Polymere auf der Basis von geradkettigen Dicarbonsäuren und/oder zweiwertigen organischen Säuren hergestellt, wobei die Polyoxadiazol-Polymere ein gutes Hochleistungs-/Hochtemperaturverhalten im Vergleich zu bereits bekannten Hochleistungspolymer aufweisen. Aufgrund ihrer hohen Molekülmasse können die erfindunggemäßen Polyoxadiazol-Polymere als Folien, Fasern, Beschichtungen und Formteile verarbeitet oder eingesetzt werden.

Die erfindungsgemäßen Polyoxadiazol-Polymere können dabei als Polyoxadiazol-Homopolymere und/oder Copolyoxadiazole vorliegen, die insbesondere aus geradkettigen Dicarbonsäuren usw. unter Verwendung von Hydrazin oder dessen Derivaten, hergestellt werden. Die Polyoxadiazol-Polymere sind in polaren aprotischen Lösungsmitteln und/oder in starken Säuren löslich, wobei die Polyoxadiazol-Polymere der Erfindung für die Herstellung von thermisch und chemisch stabilen Membranen, Folien und Fasern verwendet werden, die sich für gewerbliche Anwendungen als Verstärkungsmaterialien, Beschichtungen und Formteile eignen.

Gemäß einer bevorzugten Weiterbildung ist vorgesehen, dass das Molverhältnis von X-Einheiten zu Z-Einheiten zwischen 1:99 bis 99:1 beträgt. Weiterhin beträgt insbesondere bei den Polyoxadiazol-Polymeren mit Y-Einheiten und Z-Einheiten das Molverhältnis von X-Einheiten zu Z-Einheiten zwischen 1:99 bis 99:1. Sind X-Einheiten und Y-Einheiten bei den Polyoxadiazol-Polymeren vorhanden, beträgt das Molverhältnis von X-Einheiten zu Y-Einheiten vorzugsweise zwischen 1:99 bis 99:1.

Ferner zeichnen sich die hergestellten Polyoxadiazol-Polymere dadurch aus, dass die Polyoxadiazol-Polymere eine Molekülmasse zwischen 10² g/mol und 10⁷ g/mol, insbesondere zwischen 10³ g/mol und 10⁶ g/mol und weiter vorzugsweise zwischen 10⁴ g/mol und 10⁵ g/mol, aufweisen.

Somit werden durch die Polyoxadiazol-Polymere Hochleistungs- bzw. Hochtemperaturpolymere als Werkstoff oder dergleichen bereit gestellt, bei denen eine hohe Leistung mit einer hohen Temperatur gekoppelt ist. Die Polyoxadiazol-Polymere weisen somit verbesserte mechanische und/oder thermische und/oder chemisch stabile bzw. chemische Eigenschaften bei sehr hohen Molekulargewichten auf.

Überdies ist es von Vorteil, dass die Polyoxadiazol-Polymere in einem organischen, vorzugsweise in einem polaren und aprotischen, Lösungsmittel und/oder in einer Säure, vorzugsweise in Schwefelsäure oder Salzsäure oder Phosphorsäure, löslich sind. Somit sind die Homopolyoxadiazole und/oder Copolyoxadiazole der vorliegenden Erfindung in organischen Lösungsmitteln und/oder in starken Säuren wie Schwefel-, Salz- und Phosphorsäure löslich.

Vorzugszweise liegen die Polyoxadiazol-Polymere als Homopolyoxadiazole und/oder als Copolyoxadiazole vor, wobei insbesondere die Polyoxadiazol-Polymere in Form von Blockcopolymeren (Diblock-, Triblock-Copolymeren) und/oder in Form von statistischen Copolymeren, Copolymeren mit periodischen Sequenzen und/oder alternierenden Copolymeren vorliegen.

Bevorzugte erfindungsgemäße Polyoxadiazol-Polymere weisen eine der folgenden Strukturen 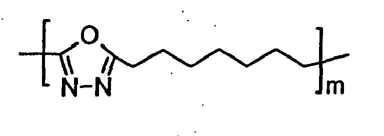 oder 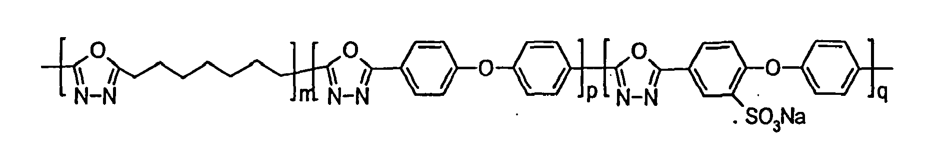 oder 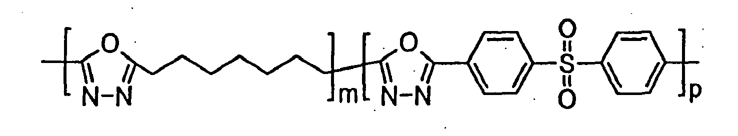 oder 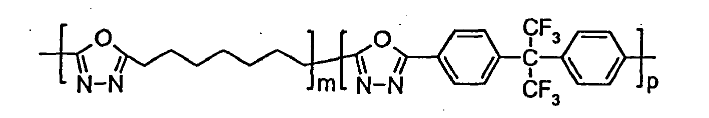 auf.

Außerdem wird die Augabe gelöst durch eine Verwendung von Polyoxadiazol-Polymeren, deren erfindungsmäße Eigenschaften voranstehend beschrieben sind, zur Herstellung von geformten Gebilden, insbesondere einer Faser oder eines Formteils oder einer Folie oder einer Beschichtung oder eines Filzes oder eines Schichtstoffs oder einer, vorzugsweise mechanisch und/oder thermisch und/oder chemisch stabilen, Membran oder eines Verstärkungsmaterials. Zur Vermeidung von Wiederholungen wird auf die obigen Ausführungen ausdrücklich verwiesen. Überdies zeichnen sich die voranstehend genannten geformten Gebilde dadurch aus, dass sie aus den Polyoxadiazol-Polymeren hergestellt sind. Dadurch ist es möglich, mechanisch und/oder thermisch und/oder chemisch stabile Membranen, Folien und Fasern herzustellen, die sich für gewerbliche Anwendungen als Verstärkungsmaterialien, Beschichtungen und Formteile eignen.

Ferner wird die Aufgabe gelöst durch ein Verfahren zum Herstellen von Polyoxadiazol-Polymeren, das durch weitergebildet wird, dass die Polyoxadiazol-Polymeren durch eine Polymerisation in einem Reaktionsmedium mit den folgenden Schritten hergestellt werden:
a) es wird eine Reaktionslösung in einem Reaktionsmedium, vorzugsweise unter einer inerten Gasatmosphäre, bereitgestellt, wobei die Reaktionslösung aus Hydrazin und aus einer zweiten Reaktionslösungskomponente, die aus einer Gruppe von geradkettigen Dicarbonsäuren und/oder verzweigtkettigen Dicarbonsäuren und/oder zweiwertigen, aliphatischen organischen Säuren und/oder deren Derivaten, hergestellt wird,
b) die Reaktionslösung aus Verfahrensschritt a) wird, vorzugsweise unter einer inerten Atmosphäre, erhitzt und
c) die Polyoxadiazol-Polymere werden in einer Lösung ausgefällt.

Vorzugsweise werden die Polyoxadiazol-Polymeren nach der Ausfällung in einem weiteren Verfahrensschritt neutralisiert.

Durch die erfindungsgemäßen Polyoxadiazol-Polymere werden Polymere in einer, vorzugsweise einstufigen, in-situ Polykondensation hergestellt, wobei diese von Polyoxadiazol-Polymere verbesserte mechanische und/oder thermische und/oder chemische Eigenschaften gegenüber bisherigen Hochleistungspolymeren aufweisen.

Gemäß einem weiteren Verfahrensschritt ist es möglich, dass die zweite Reaktionskomponente der Reaktionslösung im Verfahrensschritt a) aus einer Mischung von mehreren Säuren oder aus einer Mischung der Säuren und mit wenigstens einem Diamin gebildet wird oder ist. Die Diamine haben dabei vorzugsweise eine Struktur gemäß der Formel

H₂N-Q-NH₂

wobei Q eine Gruppe mit 1 bis 40 Kohlenstoffatomen ist.

Bei der Ausgestaltung des Verfahrens werden die Homopolyoxadiazole und/oder Copolyoxadiazole durch eine Polymerisation von mindestens einem Hydrazinsulfat und mindestens einer geradkettigen Dicarbonsäure und/oder verzweigtkettigen Di- oder Polycarbonsäure und/oder Alkendicarbonsäure hergestellt.

Darüber hinaus ist es günstig, dass die Polymerisationsreaktion für eine Zeitdauer von ein bis hundert Stunden, insbesondere für eine Zeitdauer von ein bis 48 Stunden und besonders bevorzugt für eine Zeitdauer von ein bis 24 Stunden, durchgeführt wird.

Außerdem wird vorteilhafterweise die Polymerisationsreaktion bei einer Temperatur zwischen 25°C und 300°C, insbesondere zwischen 90°C und 250°C und ganz besonders bevorzugt zwischen 100°C und 220 °C, durchgeführt.

In einer Ausgestaltung des Verfahrens ist weiterhin vorgesehen, dass im Verfahrensschritt a) Hydrazin und/oder dessen Derivate in Form von Hydrazin-Salz, insbesondere Hydrazin-Sulfatsalz, für die Reaktionslösung bereitgestellt bzw. verwendet wird.

Dazu werden insbesondere gemäß einem weiteren Verfahrensschritt als zweite Reaktionskomponente der Reaktionslösung als Dicarbonsäuren Polycarbonsäure und/oder Alkendicarbonsäure und/oder deren Carbonsäurederivate bereitgestellt.

Bevorzugterweise weisen die für die Polymerisation eingesetzten Dicarbonsäuren eine Struktur gemäß der Formel 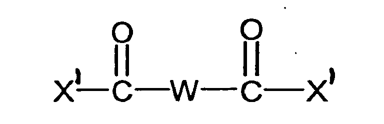 auf, wobei W eine Gruppe mit 1 bis 40 Kohlenstoffatomen ist, die vorzugsweise gesättigt und/oder ungesättigt und/oder verzweigt und/oder unverzweigt sind, wobei X' eine Gruppe mit der Formel OR² beschreibt, wobei R² ein Wasserstoffatom oder eine Gruppe mit 1 bis 20 Kohlenstoffatomen ist.

Dazu wird ferner vorgeschlagen, dass W einen Substituenten oder ein Mehrfachringsystem umfasst, wobei insbesondere zwischen den aromatischen Ringen des Mehrfachringsystems -O-, -CO-, - C(CH₃)₂-, -C(CF₃)₂- und -SO₂- - Gruppen enthalten sind. Dadurch können die Polyoxadiazol-Polymere entsprechend dem vorgesehenen Anwendungsbereich im Hinblick auf ihre erforderlichen Eigenschaften konfektioniert werden.

Überdies ist es bei dem Verfahren günstig, dass als Reaktionsmedium Polyphosphorsäure oder Schwefelsäure oder Salzsäure bereitgestellt wird. Insbesondere eignet sich Polyphosphorsäure (PPA) als bevorzugtes Reaktionsmedium für die Polykondensation zur Herstellung der Polyoxadiazol-Polymere.

Vorzugsweise wird das Reaktionsmedium vor dem Verfahrensschritt a), insbesondere unter einer inerten, Atmosphäre, vorzugsweise gasförmiger Stickstoff oder gasförmiges Argon, erwärmt. Hierbei wird vorzugsweise vor der Durchführung des Verfahrensschritts d) eine Alterungsbehandlung der Polyphosphorsäure (PPA) als Reaktionsmedium unter einer, vorzugsweise inerten, Gasatmosphäre, wie z.B. gasförmiges Stickstoff oder gasförmiges Argon ohne oder mit Wasser durch Erhitzen der Polyphosphorsäure durchgeführt. Hierbei wird die Polyphosphorsäure (PPA) auf eine Temperatur über 90°C, vorzugsweise zwischen 100°C bis 200°C, erhitzt.

Bei dem erfindungsgemäßen Verfahren weisen die Polyoxadiazol-Polymere eine der folgenden Strukturen 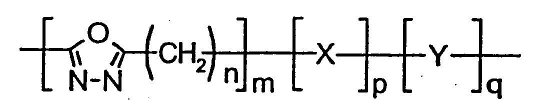 oder 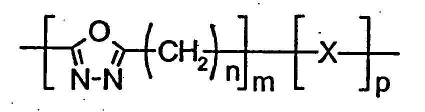 oder 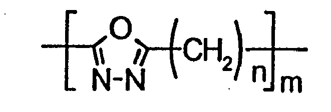 auf, wobei n eine natürliche Zahl ≥ 1, vorzugsweise ≤ 20, vorzugsweise zwischen 6 und 10 (6 ≤ n ≤ 10) ist, m, p und q ganze Zahlen sind, wobei X und Y unabhängig eine Gruppe der nachfolgend beschriebenen Strukturen 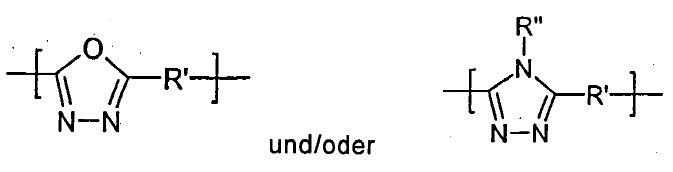 und/oder 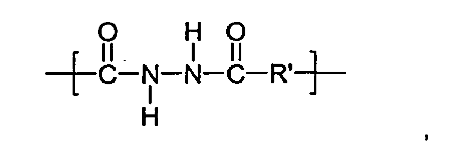 sind, wobei R' eine Gruppe mit 1 bis 40 Kohlenstoffatomen ist, die insbesondere bei der Synthese von einer Dicarbonsäure bereitgestellt werden,
und wobei R" ein Wasserstoffatom oder eine Gruppe mit 1 bis 40 Kohlenstoffatomen ist, die insbesondere bei der Synthese von einem primären Amin bereitgestellt werden.

Weiterhin weisen bevorzugte erfindungsgemäß hergestellte Polyoxadiazol-Polymere eine der folgenden Strukturen 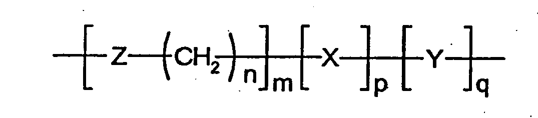 oder 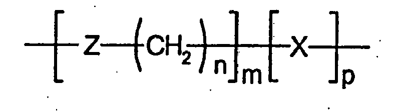 oder 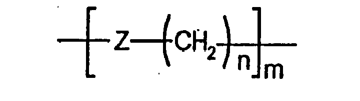 auf, wobei n eine natürliche Zahl ≥ 1, vorzugsweise ≤ 20, vorzugsweise zwischen 6 und 10 (6 ≤ n ≤ 10) ist, m, p und q ganze Zahlen sind, X und Y unabhängig eine Gruppe der nachfolgend beschriebenen Strukturen 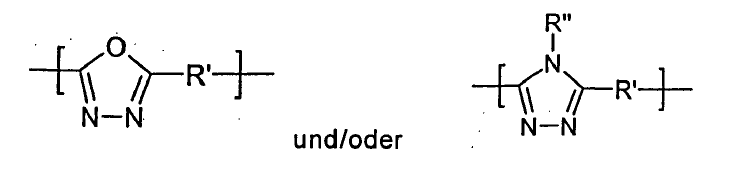 und/oder 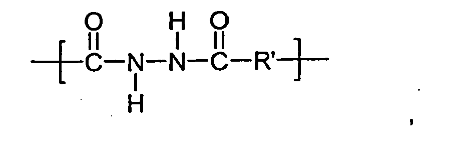 sind, wobei Z eine, vorzugsweise unabhängige, Gruppe ist, die eine der folgenden Strukturen 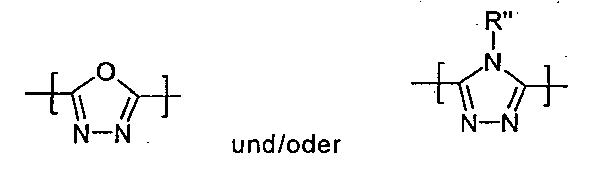 und/oder 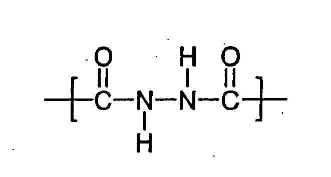 aufweist, wobei R' eine Gruppe mit 1 bis 40 Kohlenstoffatomen ist, die insbesondere bei der Synthese von einer Dicarbonsäure bereitgestellt werden,
und wobei R" ein Wasserstoffatom oder eine Gruppe mit 1 bis 40 Kohlenstoffatomen ist, die insbesondere bei der Synthese von einem primären Amin bereitgestellt werden.

Ferner werden gemäß den beschriebenen Verfahrensschritten als Polyoxadial-Polymere Homopolyoxadiazole und/oder Copolyoxadiazole hergestellt und/oder die hergestellten Polyoxadial-Polymere besitzen eine Molekülmasse zwischen 10² g/mol und 10⁷ g/mol, insbesondere zwischen 10³ g/mol und 10⁶ g/mol und weiter vorzugsweise zwischen 10⁴ g/mol und 10⁵ g/mol.

Homopolyoxadiazole und/oder Copolyoxadiazole werden vorzugsweise unter Verwendung von Hydrazin und/oder dessen Derivaten, insbesondere unter Verwendung von Hydrazinsulfat, hergestellt, wobei das Hydrazin und/oder dessen Derivate, z.B. Hydrazinsulfat, vermischt oder nicht vermischt ist mit ein oder mehreren Diaminen mit der Formel

H₂N-Q-NH₂

wobei Q eine Gruppe mit 1 bis 40 Kohlenstoffatomen ist.

Homopolyoxadiazole und/oder Copolyoxadiazole werden vorzugsweise aus einer Mischung aus Hydrazinsulfat und einer zweiwertigen linearen aliphatischen Säure hergestellt. Beispiele für zweiwertige lineare aliphatische (organische) Säuren sind z.B. Bernsteinsäure, Adipinsäure, Dimethyl-Bernsteinsäure und Azelainsäure.

Außerdem werden die Homopolyoxadiazole und/oder Copolyoxadiazole hergestellt aus mindestens einer geradkettigen Dicarbonsäure und/oder verzweigtkettigen Di- oder Polycarbonsäure und/oder Alkendicarbonsäure. Gemäß einem Aspekt der Erfindung werden die Homopolyoxadiazole und/oder Copolyoxadiazole durch die Polymerisation von mindestens einem Hydrazin und mindestens einer geradkettigen Dicarbonsäure hergestellt, wobei das Hydrazin auch ein beliebiges Hydrazinsalz, bevorzugterweise Hydrazinsulfat, umfasst.

Als Reaktionsmedium eignen sich für die Polykondensation bzw. Synthese der Polyoxadiazol-Polymere vor allem Polyphosphorsäure (PPA) oder Schwefelsäure oder rauchende Säure oder ein organisches Lösungsmittel.

Zudem wird in einer bevorzugten Ausgestaltung bei der Herstellung der erfindungsgemäßen Homopolyoxadiazole und/oder Copolyoxadiazole einer der Strukturblocks der Polyoxadiazole von einem Polyimid und/oder einem Polyamid und/oder einem Polyazol gebildet. Beispiele für Polyazole umfassen dabei Polybenzazole, Polyimidazole, Polythiazole, Polypyrazole, Polyoxadiazole und Polytriazole.

Die voranstehend beschriebenen Polyoxadiazol-Polymere zeichnen sich des Weiteren dadurch aus, dass die Homopolyoxadiazole und/oder Copolyoxadiazole in organischen Lösungsmitteln und/oder in starken Säuren wie Schwefelsäure oder Salzsäure und Phosphorsäure löslich sind.

Erfindungsgemäß werden Hochleistungs-/Hochtemperatur-Polyoxadiazol-Homopolymere und/oder -Copolyoxadiazole durch die Kondensation von geradkettigen Dicarbonsäuren in Polyphosphorsäure (PPA) synthetisiert, wobei die Polyoxadiazol-Polymere verbesserte mechanische und/oder thermische und/oder chemisch stabile Eigenschaften aufweisen.

Weitere Merkmale der Erfindung werden aus der Beschreibung erfindungsgemäßer Beispiele zusammen mit den Ansprüchen ersichtlich. Erfindungsgemäße Ausführungsformen können einzelne Merkmale oder eine Kombination mehrerer Merkmale erfüllen.

Nachfolgend wird die Erfindung anhand von Ausführungsbeispielen ohne Beschränkung des allgemeinen Erfindungsgedankens exemplarisch beschrieben, wobei bezüglich aller im Text nicht näher erläuterten erfindungsgemäßen Einzelheiten auf die Beispiele verwiesen wird.

Die folgenden Beispiele veranschaulichen bevorzugte Ausführungsformen der Erfindung. Es versteht sich, dass die Beispiele lediglich der Veranschaulichung dienen und den Erfindungsgedanken nicht beschränken.

### BEISPIELE

### Beispiel 1

Polyoxadiazole, hergestellt aus Hydrazinsulfat und Azelainsäure

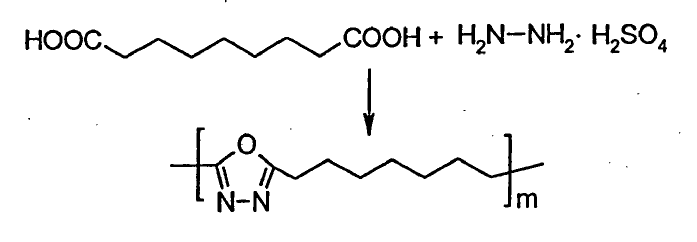

Die Polymerisationen wurden in einem Dreihalskolben (250 ml) durchgeführt, der mit einer Rührmaschine sowie mit einer Stickstoffzuleitung ausgestattet war, so dass die Reaktionsatmosphäre frei von Sauerstoff und Wasser bleibt. Zu Beginn wurde Polyphosphorsäure (PPA) in den Kolben gegeben und 0,5 h lang auf 100 °C erwärmt. Anschließend wurde Hydrazinsulfat (0,031 mol) in den Kolben gegeben, das 0,5 h lang reagieren gelassen wurde.

Die Lösung wurde dann auf 160 °C erwärmt. Anschließend wurde Azelainsäure (0,026 mol) zugegeben und vier Stunden lang reagieren gelassen. Die molare Verdünnungsrate (PPA/Hydrazinsulfat) und die molare Monomerrate (Hydrazinsulfat/Azelainsäure) wurden konstant gehalten und entsprachen 10 beziehungsweise 1,2. Die fertige Lösung wurde in Form stabiler Fasern in Wasser ausgefällt, das 5 % Gew./Vol. Natriumhydroxid enthielt.

Das erhaltene Reaktionsmedium ist sehr zähflüssig, wodurch eine Ausfällung und Neutralisierung des Polymers erschwert wird bzw. ist. Das fertige Polymer kann daher große Mengen Lösungsmittelreste enthalten, wodurch es zur Zersetzung kommen kann. Um dies zu verhindern, wurde die Polymerprobe unter Verwendung einer Schneidmühle Retsch Grindomix GM 200 in kleine Stücke zerkleinert.

Die Suspension, die das zerkleinerte Material enthielt, wurde abschließend in einen Behälter gebracht, in dem die Reinigung stattfindet. Die Reinigung umfasste die Neutralisierung des pH der Suspension und Rühren der Polymersuspension bei Zimmertemperatur über Nacht. Die fertige Polymerprobe wurde dann durch Filtration erhalten.

Die Ausbeute der Polymerisation lag über 91,5 % und das entstehende Polymer besitzt eine Molekülmasse im Bereich von 10⁵ g/mol.

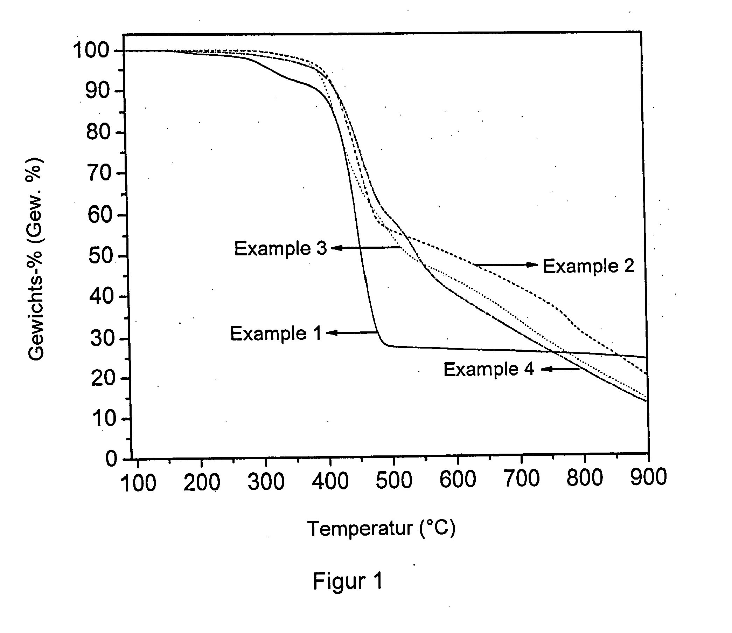

Die Wärmestabilität und die Struktureigenschaften dieses Polymers sind in Figur 1 beziehungsweise Tabelle 1 dargestellt.

### Beispiel 2

Polyoxadiazole, hergestellt aus Hydrazinsulfat, Azelainsäure und 4-4'-Oxybisbenzoesäure

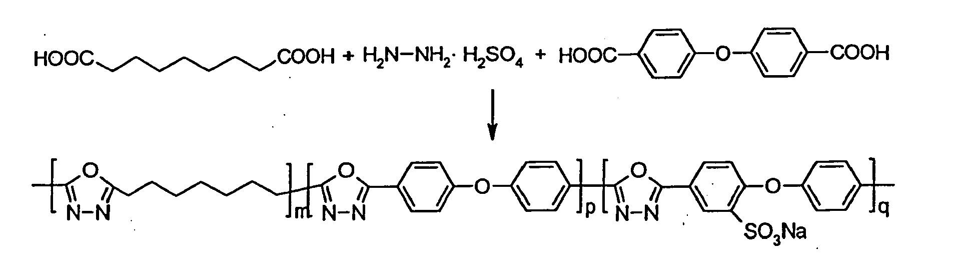

Auf analoge Weise wie bei Beispiel 1 wurden 0,013 mol Azelainsäure und 0,013 mol 4-4'-Oxybisbenzoesäure mit 0,031 mol Hydrazinsulfat in PPA zur Reaktion gebracht und auf ähnliche Weise wie in Beispiel 1 behandelt. Das fertige Reaktionsmedium wurde in Form stabiler Fasern ausgefällt.

Die Ausbeute der Polymerisation lag über 90,5 % und das entstehende Polymer besitzt eine Molekülmasse im Bereich von 10⁵ g/mol.

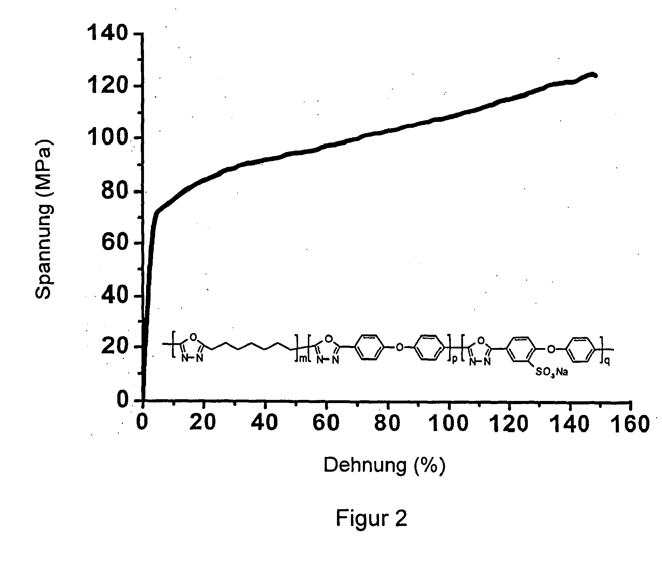

Die Wärmestabilität und die Struktureigenschaften dieses Polymers sind in Figur 1 beziehungsweise Tabelle 1 dargestellt. Zusätzlich ist in Figur 2 die Spannungs-Dehnungskurve dargestellt.

### Folienherstellung

Aus Lösungen mit einer Polymerkonzentration von 3 Gew.-% in Dimethylsulfoxid (DMSO) wurden homogene Folien gegossen. Nach dem Gießen wurden die DMSO-Reste in einem Vakuumofen 24 h lang bei 90 °C verdampft. Um Lösungsmittelreste weiter zu entfernen, wurden die Membranen 24 h lang bei 50 °C in ein Wasserbad getaucht und in einem Vakuumofen 24 h lang bei 90 °C getrocknet. Die Enddicke der Folien betrug etwa 60 µm.

### Beispiel 3 (Example 3)

Polyoxadiazole, hergestellt aus Hydrazinsulfat, Azelainsäure und 4-4'-Sulfonyldibenzoesäure

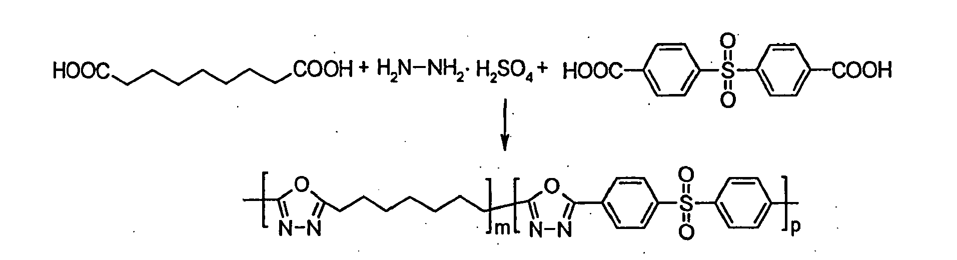

Auf entsprechende Weise wie bei Beispiel 1 wurden 0,013 mol Azelainsäure und 0,013 mol 4-4'-Sulfonyldibenzoesäure mit 0,031 mol Hydrazinsulfat in PPA zur Reaktion gebracht und auf ähnliche Weise wie in Beispiel 1 behandelt. Das fertige Reaktionsmedium wurde in Form stabiler Fasern ausgefällt.

Die Ausbeute der Polymerisation lag über 89,5 % und das entstehende Polymer besitzt eine Molekülmasse im Bereich von 10⁵ g/mol. Die Wärmestabilität und die Struktureigenschaften dieses Polymers sind in Figur 1 beziehungsweise Tabelle 1 dargestellt.

### Beispiel 4 (Example 4)

Polyoxadiazole, hergestellt aus Hydrazinsulfat, Azelainsäure und 4-4'-Hexafluoroisopropyliden-bis-benzoesäure

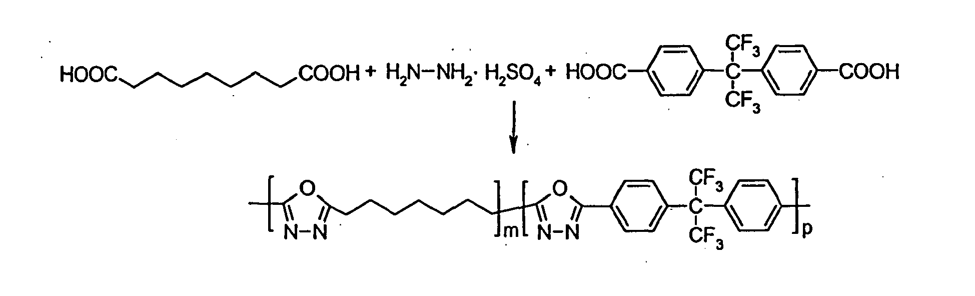

Auf analoge Weise wie bei Beispiel 1 wurden 0,013 mol Azelainsäure und 0,013 mol 4-4'-Hexafluoroisopropyliden-bis-benzoesäure mit 0,031 mol Hydrazinsulfat in PPA zur Reaktion gebracht und auf ähnliche Weise wie in Beispiel 1 behandelt. Das fertige Reaktionsmedium wurde in Form stabiler Fasern ausgefällt.

Die Ausbeute der Polymerisation lag über 75,5 % und das entstehende Polymer besitzt eine Molekülmasse im Bereich von 10⁵ g/mol.

Die Wärmestabilität und die Struktureigenschaften dieses Polymers sind in Figur 1 beziehungsweise Tabelle 1 dargestellt.
- Figur 1: zeigt die Thermogramme der Polymere aus den Bei- spielen 1 bis 4 gemäß einer thermogravimetrischen Analyse (TGA-Thermogramme) und
- Figur 2: zeigt die Spannungs-Dehnungskurven von Polymer- folien aus Copolyoxadiazol, das gemäß dem Synthese- verfahren von Beispiel 1 hergestellt wurde, mit der ein- gefügten Strukturformel von Copolyoxadiazol.

Tabelle 1 stellt die Ergebnisse aus der Elementanalyse der Polymere dar, die nach den Beispielen 1, 2, 3 und 4 hergestellt wurden. Alle genannten Merkmale, auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

**Tabelle1**

| Beispiel Example | Formel | Molekular- gewicht (g/mol) | | Elementanalysis (%) | |
|---|---|---|---|---|---|
| | | | | N/C | S |
| 1 | (C₉H₁₄N₂O)_{1.0} | 166 | berechnet | 0.26 | 0 |
| | | | gefunden | 0.26 | 0 |
| 2 | [(C₉H₁₄N₂O)_{0.51} (C₁₄H₈N₂O₂)_{0.17} (C₁₄H₈N₂O₅SNa)_{0.32}] | 233 | berechnet | 0.22 | 3.04 |
| | | | gefunden | 0.20 | 3.20 |
| 3 | [(C₉H₁₄N₂O)_{0.42} (C₁₄H₈N₂O₃)_{0.58}] | 234 | berechnet | 0.21 | 6.54 |
| | | | gefunden | 0.21 | 6.78 |
| 4 | [(C₉H₁₄N₂O)_{0.6} (C₁₇HₐN₂O₂F₆)_{0.4}] | 254 | berechnet | 0.22 | 0 |
| | | | gefunden | 0.18 | 0 |

## Patentansprüche

1. Polyoxadiazol-Polymere, **dadurch gekennzeichnet, dass** die Polyoxadiazol-Polymere eine der folgenden Strukturen 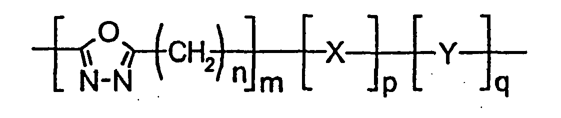 oder 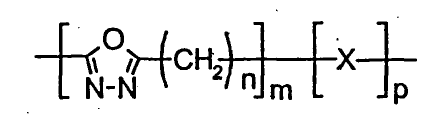 oder 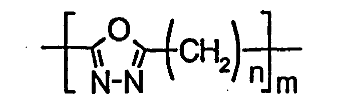 aufweisen, wobei n eine natürliche Zahl ≥ 1, vorzugsweise ≤ 20, vorzugsweise zwischen 6 und 10 (6 ≤ n ≤ 10) ist, m, p
und q ganze Zahlen sind, X und Y unabhängig eine Gruppe der nachfolgend beschriebenen Strukturen 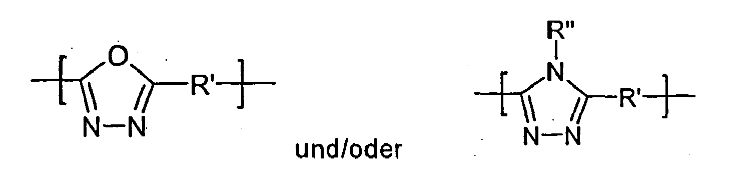 und/oder 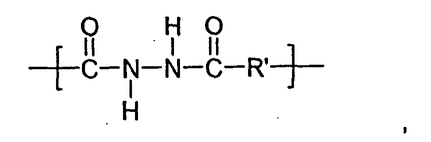 wobei R' eine Gruppe mit 1 bis 40 Kohlenstoffatomen ist und wobei R" ein Wasserstoffatom oder eine Gruppe mit 1 bis 40 Kohlenstoffatomen ist.

2. Polyoxadiazol-Polymere, **dadurch gekennzeichnet, dass** die Polyoxadiazol-Polymere eine der folgenden Strukturen 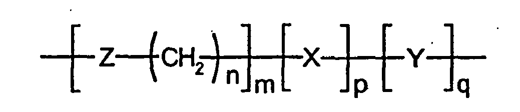 oder 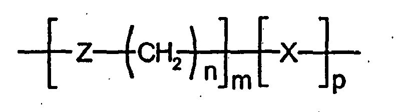 oder 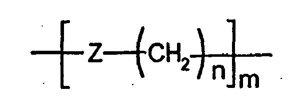 aufweisen, wobei n eine natürliche Zahl ≥ 1, vorzugsweise ≤ 20, vorzugsweise zwischen 6 und 10 (6 ≤ n ≤ 10) ist, m, p und q ganze Zahlen sind, X und Y unabhängig eine Gruppe der
nachfolgend beschriebenen Strukturen 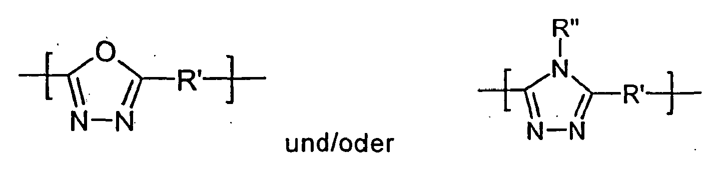 und/oder 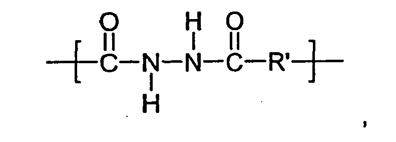 sind, wobei Z eine, vorzugsweise unabhängige, Gruppe ist, die eine der folgenden Strukturen 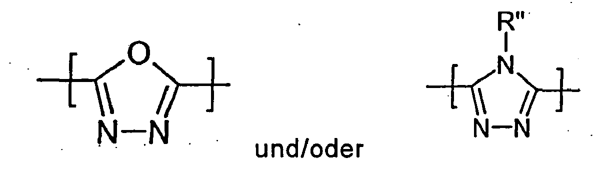 und/oder 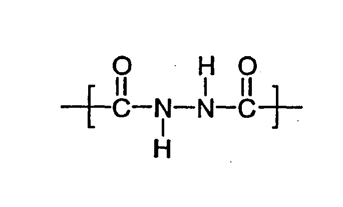 aufweist, wobei R' eine Gruppe mit 1 bis 40 Kohlenstoffatomen ist und wobei R" ein Wasserstoffatom oder eine Gruppe mit 1 bis 40 Kohlenstoffatomen ist.

3. Polyoxadiazol-Polymere nach Anspruch 2, **dadurch gekennzeichnet, dass** das Molverhältnis von X-Einheiten zu Z-Einheiten zwischen 1:99 bis 99:1 beträgt und/oder dass das Molverhältnis von Y-Einheiten zu Z-Einheiten zwischen 1:99 bis 99:1 beträgt.

4. Polyoxadiazol-Polymere nach einem der Ansprüche 1 bis 3, **dadurch gekennzeichnet, dass** das Molverhältnis von X-Einheiten zu Y-Einheiten zwischen 1:99 bis 99:1 beträgt.

5. Polyoxadiazol-Polymere nach einem der Ansprüche 1 bis 4, **dadurch gekennzeichnet, dass** die Polyoxadiazol-Polymere eine Molekülmasse zwischen 10² g/mol und 10⁷ g/mol, insbesondere zwischen 10³ g/mol und 10⁶ g/mol und weiter vorzugsweise zwischen 10⁴ g/mol und 10⁵ g/mol, aufweisen und/oder dass die Polyoxadiazol-Polymere in einem organischen, vorzugsweise in einem polaren und aprotischen, Lösungsmittel und/oder in einer Säure, vorzugsweise in Schwefelsäure oder Salzsäure oder Phosphorsäure, löslich sind und/oder dass die Polyoxadiazol-Polymere als Homopolyoxadiazole und/oder als Copolyoxadiazole vorliegen, wobei insbesondere die Polyoxadiazol-Polymere in Form von Blockcopolymeren (Diblock-, Triblock-) und/oder in Form von statistischen Copolymeren, Copolymeren mit periodischen Sequenzen und/oder alternierenden Copolymeren vorliegen.

6. Polyoxadiazol-Polymere nach einem der Ansprüche 1 bis 5, **dadurch gekennzeichnet, dass** die Polymere eine der folgenden Strukturen 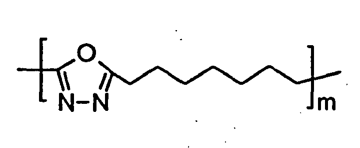 oder 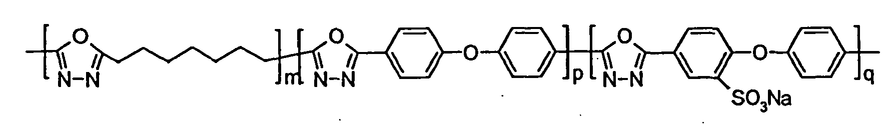 oder 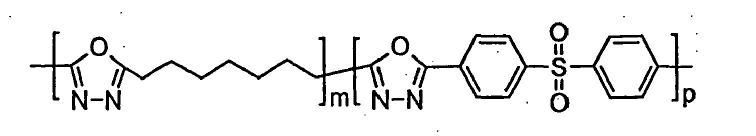 oder 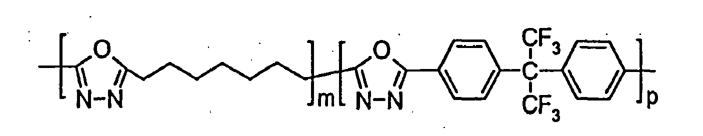 aufweisen.

7. Verwendung von Polyoxadiazol-Polymeren nach einem der Ansprüche 1 bis 6 zur Herstellung von geformten Gebilden, insbesondere einer Faser oder eines Formteils oder einer Folie oder einer Beschichtung oder eines Filzes oder eines Schichtstoffs oder einer, vorzugsweise mechanisch und/oder thermisch und/oder chemisch stabilen, Membran oder eines Verstärkungsmaterials.

8. Verfahren zum Herstellen von Polyoxadiazol-Polymeren **dadurch gekennzeichnet, dass** die Polyoxadiazol-Polymeren durch eine Polymerisation in einem Reaktionsmedium mit den folgenden Schritten hergestellt werden:
a) es wird eine Reaktionslösung in einem Reaktionsmedium, vorzugsweise unter einer inerten Gasatmosphäre, bereitgestellt, wobei die Reaktionslösung aus Hydrazin und aus einer zweiten Reaktionslösungskomponente, die aus einer Gruppe von geradkettigen Dicarbonsäuren und/oder verzweigtkettigen Dicarbonsäuren und/oder zweiwertigen, aliphatischen organischen Säuren und/oder deren Derivaten, hergestellt wird,
b) die Reaktionslösung aus Verfahrensschritt a) wird, vorzugsweise unter einer inerten Atmosphäre, erhitzt und
c) die Polyoxadiazol-Polymere werden in einer Lösung ausgefällt.

9. Verfahren nach Anspruch 8, **dadurch gekennzeichnet, dass** die zweite Reaktionskomponente aus einer Mischung von mehren Säuren oder aus einer Mischung der Säuren und mit wenigstens einem Diamin gebildet wird oder ist, wobei insbesondere die Polymerisationsreaktion für eine Zeitdauer von ein bis hundert Stunden, insbesondere für eine Zeitdauer von ein bis 48 Stunden und besonders bevorzugt für eine Zeitdauer von ein bis 24 Stunden, durchgeführt wird.

10. Verfahren nach Anspruch 8 oder 9, **dadurch gekennzeichnet, dass** die Polymerisationsreaktion bei einer Temperatur zwischen 25°C und 300°C, insbesondere zwischen 90°C und 250°C und ganz besonders bevorzugt zwischen 100°C und 220 °C, durchgeführt wird und/oder dass im Verfahrensschritt a) Hydrazin in Form von Hydrazin-Salz, insbesondere Hydrazin-Sulfatsalz, für die Reaktionslösung bereitgestellt wird und/oder dass zweite Reaktionskomponente der Reaktionslösung als Dicarbonsäuren Polycarbonsäure und/oder Alkendicarbonsäure und/oder deren Carbonsäurederivate bereitgestellt werden.

11. Verfahren nach einem der Ansprüche 8 bis 10, **dadurch gekennzeichnet, dass** die für die Polymerisation eingesetzten Dicarbonsäuren eine Struktur gemäß der Formel 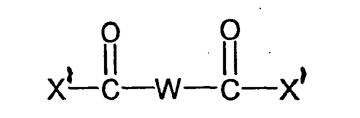 aufweisen, wobei W eine Gruppe mit 1 bis 40 Kohlenstoffatomen ist, die vorzugsweise gesättigt und/oder ungesättigt und/oder verzweigt und/oder unverzweigt sind,
wobei X' eine Gruppe mit der Formel OR² beschreibt, wobei R² ein Wasserstoffatom oder eine Gruppe mit 1 bis 20 Kohlenstoffatomen ist, wobei insbesondere W einen Substituenten oder ein Mehrfachringsystem umfasst, wobei insbesondere zwischen den aromatischen Ringen des Mehrfachringsystems -O-, -CO-, -C(CH₃)₂-, -C(CF₃)₂- und -SO₂- - Gruppen enthalten sind.

12. Verfahren nach einem der Ansprüche 8 bis 11, **dadurch gekennzeichnet, dass** als Reaktionsmedium Polyphosphorsäure oder Schwefelsäure oder Salzsäure bereitgestellt wird und/oder dass das Reaktionsmedium vor dem Verfahrensschritt a), insbesondere unter einer inerten, Atmosphäre, vorzugsweise gasförmiger Stickstoff oder gasförmiges Argon, erwärmt wird.

13. Verfahren nach einem der Ansprüche 8 bis 12, **dadurch gekennzeichnet, dass** die Polyoxadiazol-Polymere eine der folgenden Strukturen 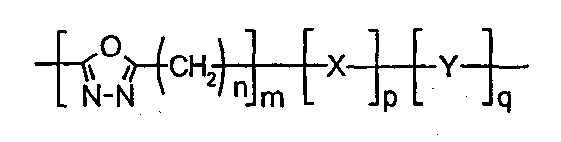 oder 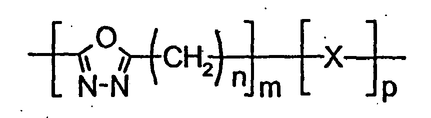 oder 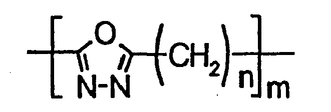 aufweisen, wobei n eine natürliche Zahl ≥ 1, vorzugsweise ≤ 20, vorzugsweise zwischen 6 und 10 (6 ≤ n ≤ 10) ist, m, p und q ganze Zahlen sind, X und Y unabhängig eine Gruppe der nachfolgend beschriebenen Strukturen 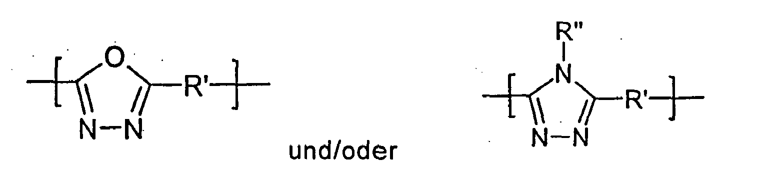 und/oder 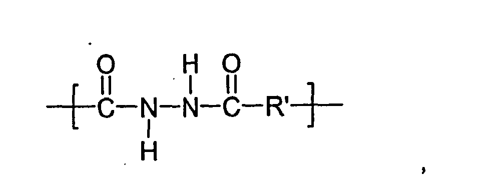 wobei R' eine Gruppe mit 1 bis 40 Kohlenstoffatomen ist und wobei R" ein Wasserstoffatom oder eine Gruppe mit 1 bis 40 Kohlenstoffatomen ist.

14. Verfahren nach einem der Ansprüche 8 bis 12, **dadurch gekennzeichnet, dass** die Polyoxadiazol-Polymere eine der folgenden Strukturen 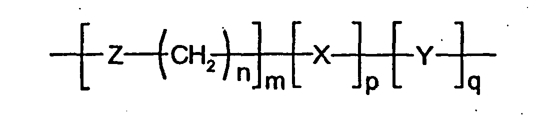 oder 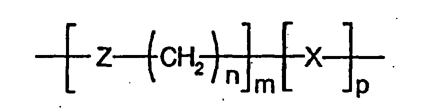 oder 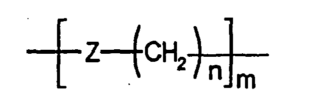 aufweisen, wobei n eine natürliche Zahl ≥ 1, vorzugsweise ≤ 20, vorzugsweise zwischen 6 und 10 (6 ≤ n ≤ 10) ist, m, p und q ganze Zahlen sind, X und Y unabhängig eine Gruppe der nachfolgend beschriebenen Strukturen 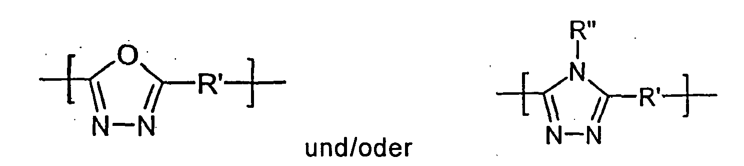 und/oder 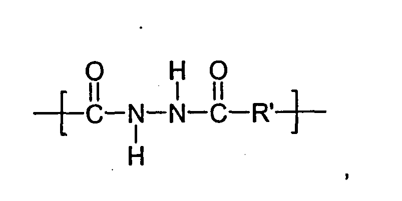 sind, wobei Z eine, vorzugsweise unabhängige, Gruppe ist, die eine der folgenden Strukturen 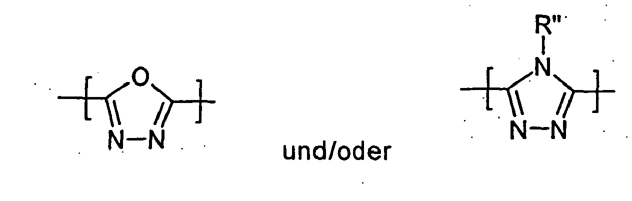 und/oder 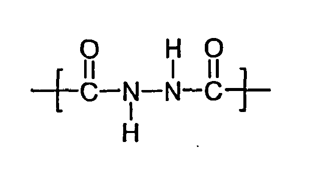 aufweist, wobei R' eine Gruppe mit 1 bis 40 Kohlenstoffatomen ist und wobei R" ein Wasserstoffatom oder eine Gruppe mit 1 bis 40 Kohlenstoffatomen ist.

15. Verfahren nach einem der Ansprüche 8 bis 14, **dadurch gekennzeichnet, dass** als Polyoxadial-Polymere Homopolyoxadiazole und/oder Copolyoxadiazole hergestellt werden und/oder die hergestellten Polyoxadial-Polymere eine Molekülmasse zwischen 10² g/mol und 10⁷ g/mol, insbesondere zwischen 10³ g/mol und 10⁶ g/mol und weiter vorzugsweise zwischen 10⁴ g/mol und 10⁵ g/mol, besitzen.
